# EUROPEAN PATENT APPLICATION

(11) **EP 3 530 515 A1**
(43) Date of publication of application: **28.08.2019**
(21) Application number: 18157746.1
(22) Date of filing: 21.02.2018
(51) Int. Cl.: B60L 11/18, B60L 3/00

(54) **A CHARGING MODULE**

(71) Applicant: Ningbo Geely Automobile Research & Development Co. Ltd., Hangzhou Bay New District Ningbo 315336 (CN)
(72) Inventor: Berggren, Alexander, 41744 Göteborg (SE); Samuelsson, Gabriel, 44196 Alingsås (SE)
(74) Representative: Zacco Sweden AB

(57) **Abstract**

The invention relates to a portable electric charging module (2) for a vehicle (1). The charging module (2) comprises a casing (4) and a converter (5) for converting AC to DC arranged inside the casing. The ACDC converter (5) comprises an electric input (6) for receiving AC power from an external source and an electric output (10) for providing DC power to the vehicle (1) when the charging module (2) is electrically connected to the vehicle via an electrical connector (11) of the charging module. The charging module (2) is provided with a coupling portion (16) of a mechanical coupling device (17) by which coupling portion the charging module (2) is mechanically attachable to and releasable from the vehicle (1).

## Description

### TECHNICAL FIELD

The invention relates to a portable electric charging module for a vehicle, and an electric charging inlet arrangement for a vehicle.

### BACKGROUND

A plug-in electric vehicle (PEV) must be electrically charged to function as intended. Such a vehicle usually has a charger arranged on the vehicle, a so-called on-board charger (OBC). The OBC converts AC to DC enabling the PEV to be charged directly from an external AC source connected to the electric vehicle inlet (EVI) with a minimum of equipment. The capacity of the OBC is however limited by its size and the space available on a vehicle is also limited. Thus, the maximum charging rate is limited by the size and cost of the OBC and cannot be easily upgraded.

Further, should the vehicle be able to be charged by a DC source as a complement, also a DC charging connection of the EVI has to be provided. The use of both an AC charging connection and a DC charging connection of the EVI, will result in increased number of components, weight and cost. In addition, when adding components, the space available for the AC to DC converter components of the OBC will be further reduced, thereby limiting the charging capacity.

### SUMMARY

An objective of the invention is to provide a portable electric charging module for a vehicle, by which charging module the charging capacity can be increased.

The objective is achieved by a portable electric charging module for a vehicle, wherein the charging module comprises a casing and a converter for converting AC to DC arranged inside the casing, and the ACDC converter comprises an electric input for receiving AC power from an external source and an electric output for providing DC power to the vehicle when the charging module is electrically connected to the vehicle via an electrical connector of the charging module, and wherein the charging module is provided with a coupling portion of a mechanical coupling device by which coupling portion the charging module is mechanically attachable to and releasable from the vehicle.

The invention is based on the insight that by such a charging module, the OBC can be replaced by the charging module and the design of the ACDC converter is not limited by the packing space available on the vehicle. The design and the charging capacity of the ACDC converter can be adapted to different applications and markets. Only one charging connection of the electric inlet of the vehicle is required even if the possibility to charge the vehicle from a DC source as a complement is desired. The DC charging connection of the EVI can be used both for charging from an external AC source via the charging module and directly from a DC source. Further, the space available on the vehicle for other components is increased since the OBC is not needed.

By the expression that the charging module is mechanically attachable and releasable from the vehicle is meant that the charging module is fastened in position relative to the vehicle and carried by the vehicle when attached thereto and can be freely removed from the vehicle when released therefrom.

Further, since the charging module is directly attachable to the vehicle by means of the mechanical coupling device, the electrical connection between the charging module and the electric inlet of the vehicle can be provided by electric connectors contacting each other when the charging module is attached. Thus, there is no need of plugging in a DC cable extending between the charging module and the electric inlet of the vehicle which would be required if an ACDC converter arranged at a distance from the vehicle would be used for charging.

By portable is meant that the charging module can be managed manually, i.e. be attached to and released from the vehicle by hand. For example, the charging module can be kept at a charging station, a garage or in the vehicle when not being used.

According to one embodiment, the charging module has a handle by which the charging module can be carried and moved relative to the vehicle when attaching and releasing the charging module to/from the vehicle. Hereby, the handling of the charging module is facilitated.

According to another embodiment, the coupling portion constitutes part of a quick release coupling. Hereby, attachment and removal of the charging module can be easily performed in a convenient way.

According to a further embodiment, the electrical connector is arranged for connecting the DC power electric output to the vehicle when the charging module is being mechanically attached to the vehicle. Hereby, the mechanically attachment of the charging module to the vehicle and the electrical connection of the charging module to an electric inlet of the vehicle, can be performed at the same time in a single motion, for instance.

According to a further embodiment, the charging module comprises a means for transferring heat between the charging module and a thermal system of the vehicle when the charging module is mechanically attached to the vehicle. Hereby, the thermal system of the vehicle can be used for cooling components of the charging module at high power charging and/or high ambient temperatures or for heating the components at very low ambient temperatures. Thus, an external cooling system for controlling the temperature of the charging module can be dispensed with.

According to a further embodiment, the heat transfer means comprises a contact surface of the charging module for contacting a surface of a component of the vehicle for transferring heat between the charging module and the component which component is provided with one or more channels for circulating a working fluid in the component and transferring heat between the component and the working fluid. Hereby, an efficient heat transfer between the charging module and the vehicle thermal system can be achieved without using any complex cooling system arranged in the charging module.

According to a further embodiment, the contact surface has a normal vector that is substantially in parallel with a main connection direction of the mechanical coupling device. Hereby, the contact surface can be positioned to abut against the component surface of the vehicle when the charging module is being attached to the vehicle.

According to a further embodiment, the contact surface forms a ring extending around the coupling portion and the electric connector, and preferably the contact surface is a surface of the casing. Hereby, the surface can be designed with a relatively large area for efficient heat transfer.

According to a further embodiment, the heat transfer means comprises one or more heat pipes arranged for transferring heat to the contact surface. Hereby, heat can be effectively transported to the contact surface of the charging module and thereafter further to the vehicle thermal system.

According to another aspect of the invention, a further objective is to provide an electric charging inlet arrangement for a vehicle, by which charging inlet arrangement the charging capacity can be increased.

This objective is achieved by an electric charging inlet arrangement for a vehicle, wherein the charging inlet arrangement is mechanically attachable and electrically connectable to a portable electric charging module for transmitting electric power from an external source to the vehicle via the charging module, wherein the charging inlet arrangement comprises a heat transfer component for interaction with a thermal system of the vehicle for transferring heat between the charging module and the heat thermal system via the heat transfer component when the charging module is mechanically attached to the charging inlet arrangement.

Hereby, the thermal system of the vehicle can be used for cooling components of the charging module at high power charging and/or high ambient temperatures or for heating the components at very low ambient temperatures. Thus, an external cooling system for temperature conditioning the charging module can be dispensed with.

The charging inlet arrangement is intended to be arranged on the vehicle and be fixed relative to the vehicle for providing a charging connection, for example a DC charging connection, and preferably the charging inlet arrangement comprises an electrical connector by which connector the charging module is electrically connectable to the vehicle for providing DC power to the battery system of the vehicle via the electrical connector.

According to a further embodiment, the heat transfer component of the charging inlet arrangement has one or more channels for circulating a working fluid in the heat transfer component and transferring heat between the heat transfer component and the working fluid. Hereby, the heat can be effectively transferred between the heat transfer component and the vehicle thermal system. The working fluid can be part of the vehicle thermal system or be thermally connected via any kind of heat changer to the vehicle thermal system.

In addition, the invention relates to a charging system for a vehicle, and a vehicle comprising a charging module, a charging inlet arrangement and/or a charging system.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1a is a schematic view of a vehicle and a portable electric charging module attached to the vehicle,
Fig. 1b shows the charging module of Fig. 1 released from the vehicle,
Figs. 2a and 2b are perspective views of a charging module and a charging inlet arrangement,
Fig. 2c is a partly cut perspective view corresponding to Fig. 2b, showing heat pipes of the charging module,
Fig. 2d is a perspective view of the charging module and a charging inlet arrangement illustrated in Fig. 2b when being connected to each other for charging,
Fig. 3a is a partly cut perspective view of a heat transfer component schematically connected to a thermal system of a vehicle, and
Fig. 3b is a perspective view of the heat transfer component illustrated in Fig. 3a showing means for suspension of the heat transfer component in the charging inlet arrangement.

### DETAILED DESCRIPTION OF EXAMPLE EMBODIMENTS

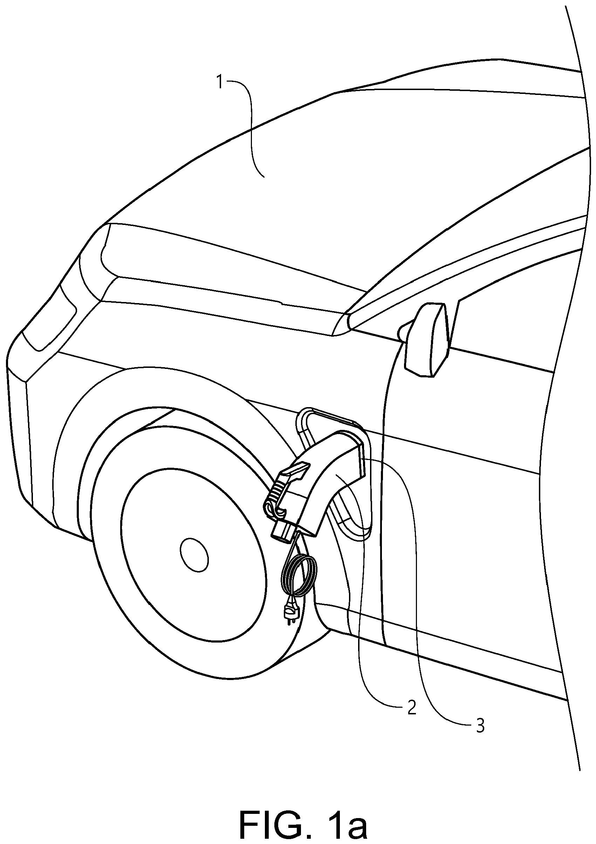

Fig. 1a is a schematic illustration of a vehicle 1 and a portable electric charging module 2 attached to the vehicle 1.

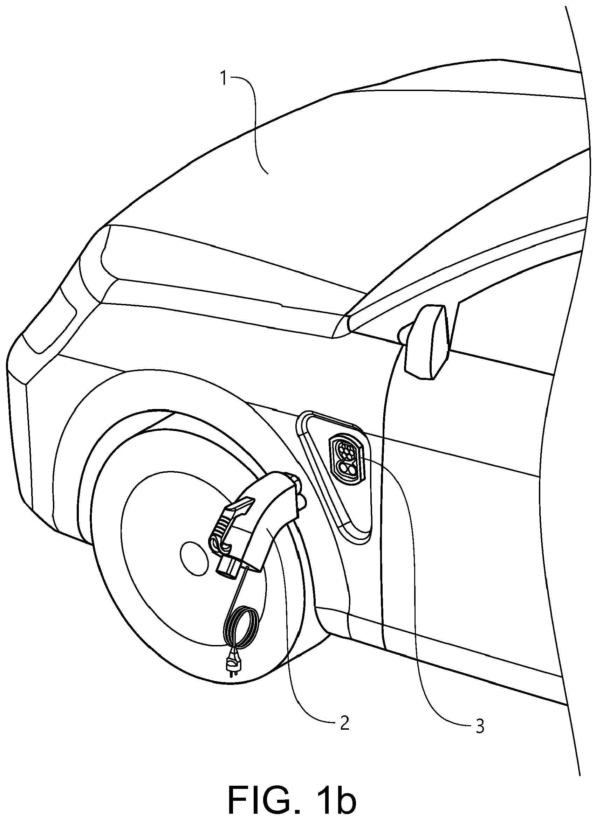

The vehicle 1 can be a plug-in electric vehicle. The charging module 2 is connectable to an external AC source (not shown) and to an electric inlet 3 of the vehicle 1 for charging an energy storage (not shown) of the vehicle 1, for example a battery of the vehicle. When the charging operation has been performed, the charging module 2 can be released and removed from the vehicle 1, such as illustrated in Fig. 1b, and disconnected from the AC source. The charging module 2 can then be kept at a charging station, a garage or preferably in the vehicle until the next time charging is to be performed.

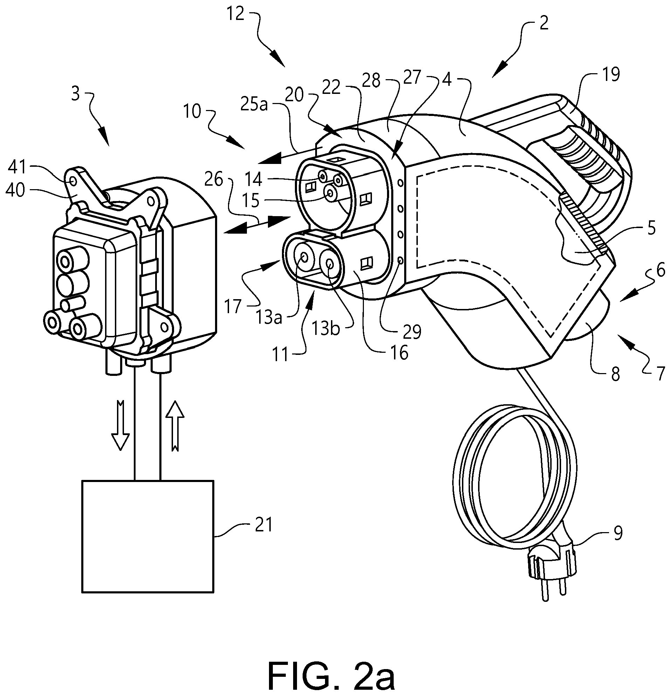

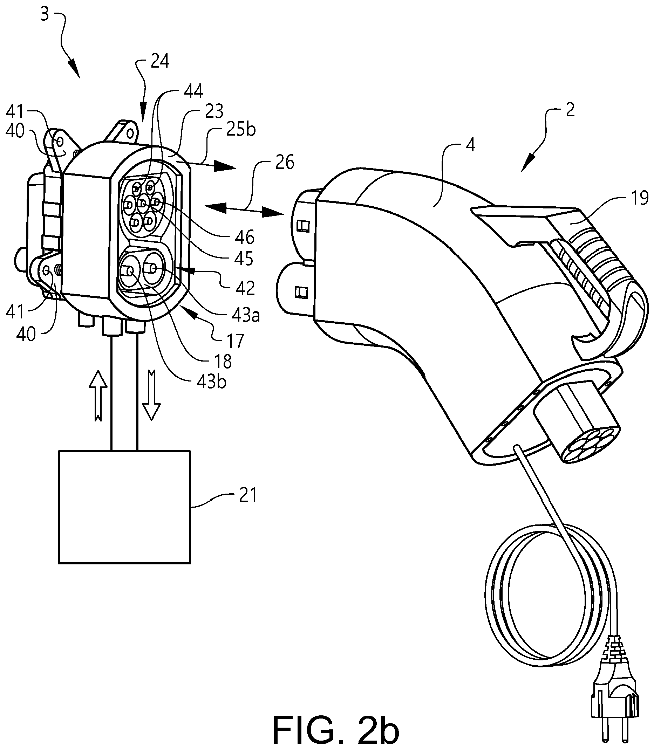

The portable electric charging module 2 and an electric charging inlet arrangement 3 are shown in perspective views in Figs. 2a and 2b.

The charging module 2 comprises a casing 4 and a converter 5 for converting AC to DC which converter is arranged inside the casing 4. The ACDC converter 5 is not illustrated in detail. The design and components of an ACDC converter are well known by a person skilled in the art and will not be further described herein. The ACDC converter 5 comprises an electric input 6 for receiving AC power from an external AC source. The electric input 6 can be arranged at a first end 7 of the charging module 2. For the electric connection between the charging module 2 and the AC source, the charging module 2 has an electrical connector, which can be part of an AC power socket 8 or plug 9, for example a Type 2 Male Plug Pinout and/or a cable with an AC Schuko plug.

The charging module 2 further comprises an electric output 10 for providing DC power to the vehicle 1 when the charging module 2 is electrically connected to the vehicle 1 via an electrical connector 11 of the charging module 2. The electric output 10 can be arranged in a second end 12 of the charging module. For the electric connection between the charging module and the electric charging inlet arrangement 3 of the vehicle 1, the charging module 2 can have a Combo2 female connector, for instance, which is a variant of the Type 2 connector where two DC pins 13a, 13b have been added and AC pins have been removed. In the illustrated example embodiment, the electrical connector 11 comprises a DC⁺ pin 13a and a DC⁻ pin 13b. In addition, there are two signalling pins 14 and a protective earth pin 15.

In addition to the ACDC converter, the charging module preferably comprises other components, such as electric and electronic components which can be used for communication with the vehicle and for controlling the charging operation. The charging module can be designed in the same way as an OBC having an AC Power Input at a Primary Voltage Zone, a HVDC Power Output at a HV Voltage Zone and a LV Voltage Zone for Vehicle LV Signals.

The charging module 2 is provided with a coupling portion 16 of a mechanical coupling device 17 by which coupling portion 16 the charging module 2 is mechanically attachable to and releasable from the charging inlet arrangement 3 and the vehicle 1. The coupling device 17 has a further coupling portion 18 arranged on the vehicle. The coupling portion 16 of the charging module 2 and the further coupling portion 18 of the vehicle form the mechanical coupling device 17. The coupling portion 16 and the further coupling portion 18 can be engaged for attaching the charging module 2 to the vehicle and disengaged for releasing the charging module 2 from the vehicle. Such a mechanical coupling device 17 can be achieved in many ways with various coupling portions. Each of the coupling portion of the charger module and the coupling portion of charging inlet arrangement may constitute part of a quick release coupling.

The charging module 2 has suitably a handle 19 by which handle the charging module 2 can be carried and moved relative to the vehicle 1 when attaching and releasing the charging module to/from the vehicle.

In the example embodiment illustrated in Figs. 2a and 2b, the mechanical coupling device 17 is integrated in the connector system for electric connection of the charging module. Since most electric plug-and-socket systems have a mechanical coupling device in addition to the electric connection, for keeping the plug and socket attached to each other, such a mechanical coupling device can be used for attaching the charging module to the vehicle provided that the strength of the plug-and-socket coupling device is sufficient for the size and weight of the charging module. Thus, here the electrical connector 11 of the charging module 2 for connecting the DC power electric output to the vehicle 1 can be connected to the electric charging inlet arrangement 3 when the charging module 2 is being mechanically attached to the vehicle 1.

The charging module 2 can comprise a means 20 for transferring heat between the charging module 2 and a thermal system 21 of the vehicle 1 when the charging module 2 is mechanically attached to the vehicle 1. The heat transfer means 20 can comprise a contact surface 22 of the charging module 2 for contacting a surface 23 of a component 24 of the vehicle 1 for transferring heat between the charging module 2 and the component 24, which component 24 is provided with one or more channels for circulating a working fluid in the component and transferring heat between the component and the working fluid. The working fluid can be part of the vehicle thermal system 21 or be thermally connected to the vehicle thermal system via any kind of heat changer. Such a heat transfer component 24 will be further described hereinbelow.

The contact surface 22 is arranged at the second end 12 of the charger module 2 to be attached to the vehicle 1. Heat can be transferred by thermal conductivity between the charger module 2 and the vehicle 1. Preferably, the contact surface 22 of the charger module 2 and the corresponding surface 23 of the vehicle inlet 3, both have a normal vector 25a, 25b that is substantially in parallel with a main connection direction 26 of the mechanical coupling device 17 such that the surfaces can be brought together when the charger module 2 is attached to the vehicle 1. The size and shape of the contact surface 22 can be varied to achieve the area required for the desired heat transfer. For example, the contact surface 22 can form a ring 27 extending around the coupling portion 16 and the electric connector 11. Further, the contact surface 22 is preferably a surface of the casing 4. For example, an end portion 28 of the casing 4 at the second end 12 of the charger module 2 can be provided with the contact surface 22.

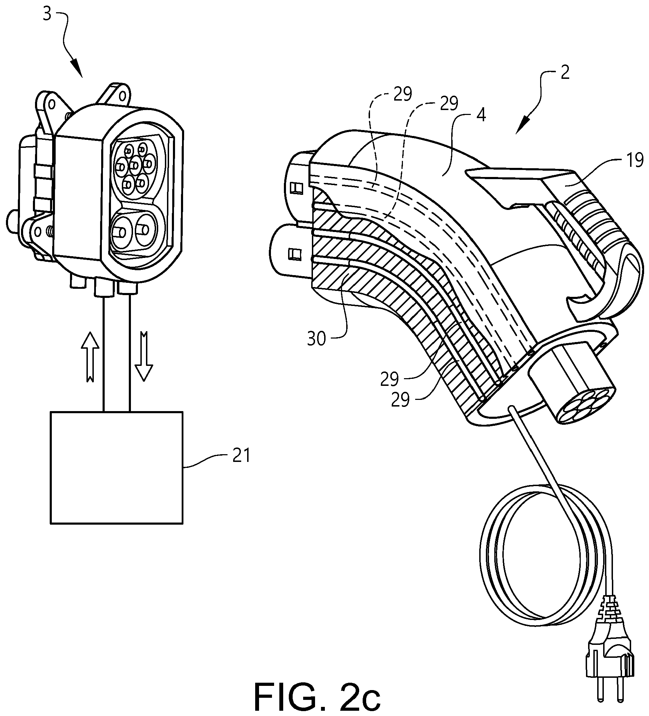

Fig. 2c shows the charging module 2 partly cut, where half the thickness of the casing wall 30 has been removed for a portion of the casing. Further, as illustrated in Fig. 2c, the heat transfer means 20 may comprise one or more heat pipes 29 arranged for transferring heat from the ACDC converter components, or other components of the charging module, to the contact surface 22 or the interface between the contact surface 22 and the vehicle component surface 23. Such a heat pipe 29 combining the principle of thermal conductivity and phase transition of a working fluid in the heat pipe for transfer heat is well known by a person skilled in the art. The heat pipes can be arranged in the casing wall 30 and end at or close to the contact surface 22. Optionally, the heat pipes could also be arranged inside the casing.

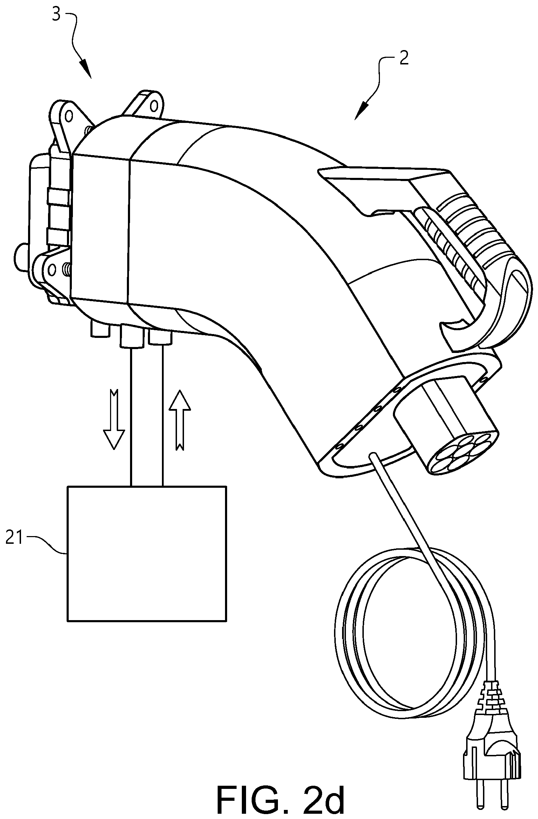

Fig. 2d shows the charging module 2 and the charging inlet arrangement 3 when being mechanically connected to each other in the way the charging module 2 is connected to the vehicle 1 when the charging inlet arrangement 3 is mounted on the vehicle 1.

Figs. 2a and 2b also show an electric charging inlet arrangement 3 for a vehicle 1. The charging inlet arrangement 3 is mechanically attachable and electrically connectable to a portable electric charging module 2 for transmitting electric power from an external source to the vehicle 1 via the charging module 2. The charging inlet arrangement 3 is intended to be arranged on the vehicle 1. For example, the inlet charging arrangement 3 can have flanges 40 with through holes 41 for receiving bolts by which the charging inlet arrangement 3 is attached to the vehicle 1. In the example embodiment illustrated in Figs. 2a and 2b, the charging inlet arrangement 3 comprises an electrical connector 42 by which connector the charging inlet arrangement 3 is electrically connectable to the charging module 2. Thereby, the charging module 2 is electrically connectable to the vehicle for providing DC power to the vehicle 1 via the electrical connector 42.

For the electric connection between the charging module 2 and the electric charging inlet arrangement 3 of the vehicle, the charging inlet arrangement 3 can have a Type 2 Male Plug Pinout Combo coupler, for instance, which is a variant of the Type 2 connector where DC pins 43a, 43b have been added. In the illustrated example embodiment, the electrical connector 42 comprises a DC⁺ pin 43a and a DC⁻ pin 43b. In addition, there are two signalling pins 44 and a protective earth pin 45, and four AC pins 46. In this application, the AC pins could be removed. The charging inlet arrangement 3 is in turn electrically connected to a battery system (not shown) of the vehicle 1.

The charging inlet arrangement 3 has suitably a coupling portion 18 of a mechanical coupling device 17 by which coupling portion 18 the charging inlet arrangement 3 is mechanically attachable to and releasable from the charging module 2. The coupling device 17 has another coupling portion 16 arranged on the charging module 2. The coupling portion of the charging module and the coupling portion of the charging inlet arrangement form the mechanical coupling device 17. These coupling portions can be engaged for attaching the charging module to the vehicle and disengaged for releasing the charging module from the vehicle. Such a mechanical coupling device could be achieved in many ways with various coupling portions. Each of the coupling portion of the charging inlet arrangement and the coupling portion of the charging module may constitute part of a quick release coupling.

As also described hereinabove with reference to the charging module, in the example embodiment illustrated in Figs. 2a and 2b, the mechanical coupling device 17 is integrated in the connector system for electric connection of the charging module and the charging inlet arrangement. Since most electric plug-and-socket systems have a mechanical coupling device in addition to the electric connection, for keeping the plug and socket attached to each other, such a mechanical coupling device can be used for attaching the charging inlet arrangement to the charging module provided that the strength of the plug-and-socket coupling device is sufficient for the size and weight of the charging module.

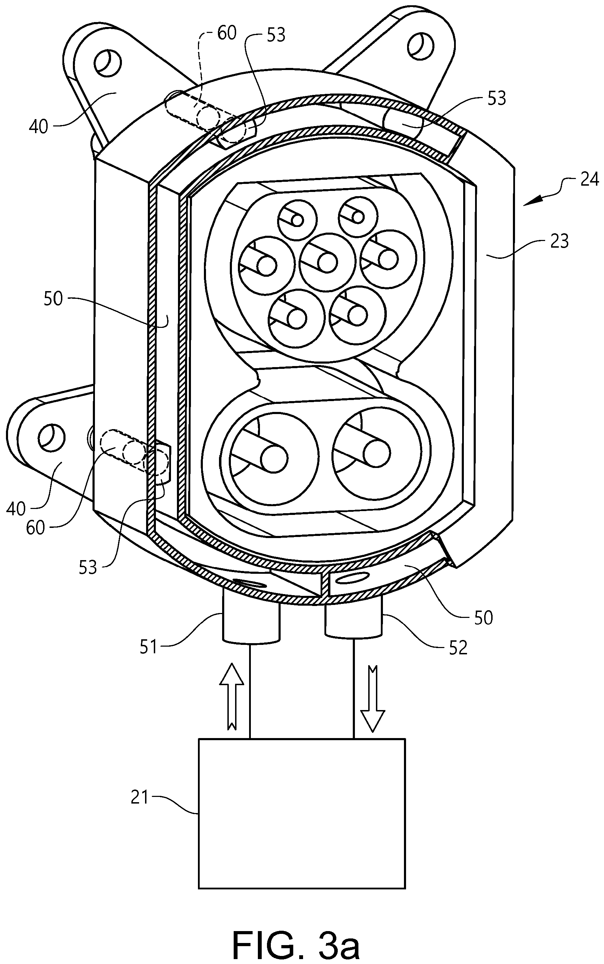

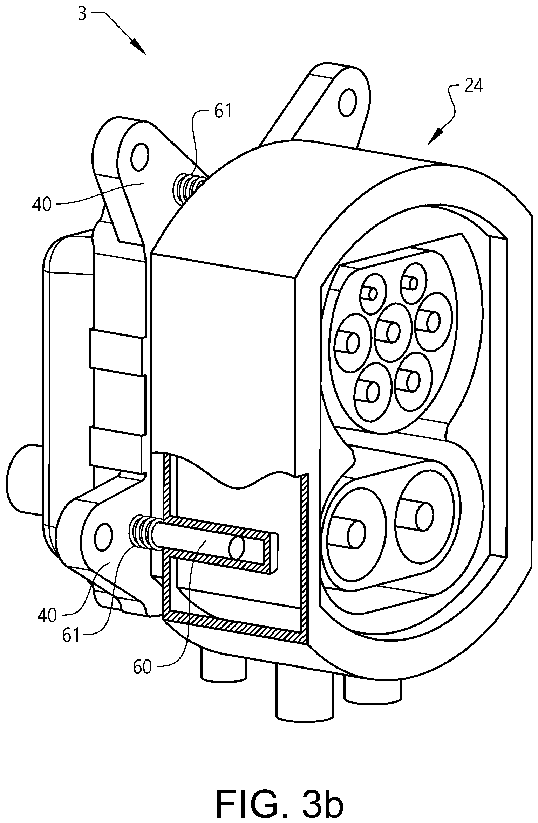

The charging inlet arrangement comprises a heat transfer component 24 for interaction with a thermal system 21 of the vehicle for transferring heat between the charging module 2 and the heat thermal system 21 via the heat transfer component 24 when the charging module 2 is mechanically attached to the charging inlet arrangement 3. The heat transfer component 24 is also illustrated in Figs. 3a and 3b.

Fig. 3a shows the heat transfer component 24 together with the schematic illustrated thermal system 21 of the vehicle 1. The heat transfer component 24 preferably has one or more channels 50 for circulating a working fluid in the heat transfer component 24 and transferring heat between the heat transfer component 24 and the working fluid. In Fig. 3a, the view of the heat transfer component 24 is partly cut for illustrating such a channel 50 for the working fluid. The heat transfer component 24 has an inlet 51 for the working fluid and an outlet 52 for the working fluid with the channel 50 extending therebetween. Thus, the working fluid can be circulated through the heat transfer component 24. The working fluid can be part of the vehicle thermal system 21 or be thermally connected to the vehicle thermal system 21 via any kind of heat changer.

The vehicle thermal system 21 of the vehicle can be any suitable cooling or heating system, such as for example a Heating, Ventilation and Air Conditioning" (HVAC) system or a battery cooling system. The working fluid can be water or any other suitable heat transfer medium.

Further, the heat transfer component 24 preferably has a contact surface 23 for contacting a surface 22 of the charging module 2 for transferring heat between the charging module 2 and the heat transfer component 24. The contact surface 23 of the heat transfer component 24 suitably constitutes an outer surface of a wall delimiting the working fluid channel 50. Optionally, inside the channel 50 some flow disturbance members 53 can be arranged, for example one or more protrusions which reduce the cross-section area of the channel 50.

The heat transfer component 24 and said one or more channels 50 can be designed in many ways. Preferably, the heat transfer component 24 is ring-shaped and extends around the coupling portion 18 and the electrical connector 42. The heat transfer component can constitute a casing of the charging inlet arrangement 3 which encloses the electrical connector 42 and the coupling portion 18 of the mechanical coupling device 17.

Fig. 3b shows in a partly cut perspective view how the heat transfer component 24 can be suspended in the charging inlet arrangement 3. The heat transfer component 24 can be displaceable in the connection direction 26 of the mechanical coupling device 17 relative to the remaining part of the charging inlet arrangement 3 and relative to the vehicle 1. The heat transfer component 24 can be displaceable while movement of the heat transfer component 24 is counteracted by a spring force. For example, the heat transfer component 24 can be arranged on pins 60 which extend in the connection direction 26 of the mechanical coupling device 17 and are provided with springs 61. In the example embodiment illustrated in Figs. 3a and 3b, each sliding pin 60 is arranged in one of the flanges 40 and received by a hole of one of the protrusions 53 of the heat transfer component 24.

When the charging module 2 is to be attached to the charging inlet arrangement 3, the heat transfer component 24 has to be pushed against the spring force of the springs 61 a certain distance for enabling the coupling portion 16 of the charging module 2 and the further coupling portion 18 of the charging inlet arrangement 3 to be connected to each other. Hereby, it can be secured that the contact surface 22 of the charging module 2 and the contact surface 23 of the charging inlet arrangement 3 are abutting against each other when the charging module 2 is attached to the vehicle 1.

It is to be understood that the present invention is not limited to the embodiments described above and illustrated in the drawings; rather, the skilled person will recognize that many changes and modifications may be made within the scope of the appended claims.

## Claims

1. A portable electric charging module (2) for a vehicle (1), the charging module (2) comprising a casing (4) and a converter (5) for converting AC to DC arranged inside the casing, the ACDC converter (5) comprising an electric input (6) for receiving AC power from an external source and an electric output (10) for providing DC power to the vehicle (1) when the charging module (2) is electrically connected to the vehicle via an electrical connector (11) of the charging module, the charging module (2) being provided with a coupling portion (16) of a mechanical coupling device (17) by which coupling portion the charging module (2) is mechanically attachable to and releasable from the vehicle (1).

2. A portable electric charging module according to claim 1, **characterized in that** the coupling portion (16) constitutes part of a quick release coupling.

3. A portable electric charging module according to claim 1 or 2, **characterized in that** the electrical connector (11) is arranged for connecting the DC power electric output (10) to the vehicle (1) when the charging module (2) is being mechanically attached to the vehicle (1).

4. A portable electric charging module according to any preceding claim, **characterized in that** the charging module (2) comprises a means (20) for transferring heat between the charging module and a thermal system (21) of the vehicle (1) when the charging module (2) is mechanically attached to the vehicle (1).

5. A portable electric charging module according to claim 4, **characterized in that** the heat transfer means (20) comprises a contact surface (22) of the charging module (2) for contacting a further surface (23) of a component (24) of the vehicle (1) for transferring heat between the charging module and the component which component (24) is provided with one or more channels (50) for circulating a working fluid in the component and transferring heat between the component and the working fluid.

6. A portable electric charging module according to claims 5, **characterized in that** the contact surface (22) has a normal vector (25a) that is substantially in parallel with a main connection direction (26) of the mechanical coupling device (17).

7. A portable electric charging module according to claim 5 and 6, **characterized in that** the contact surface (22) forms a ring (27) extending around the coupling portion (16) and the electric connector (11).

8. A portable electric charging module according to any of claims 5-7, **characterized in that** the contact surface (22) is a surface of the casing (4).

9. A portable electric charging module according to claims 5-8, **characterized in that** the heat transfer means (20) comprises one or more heat pipes (29) arranged for transferring heat to the contact surface (22).

10. A portable electric charging module according to any preceding claim, **characterized in that** the charging module (2) has a handle (19) by which the charging module (2) can be carried and moved relative to the vehicle (1) when attaching and releasing the charging module to/from the vehicle.

11. An electric charging inlet arrangement (3) for a vehicle (1), the charging inlet arrangement (3) being mechanically attachable and electrically connectable to a portable electric charging module (2) for transmitting electric power from an external source to the vehicle (1) via the charging module (2), the charging inlet arrangement (3) comprising a heat transfer component (24) for interaction with a thermal system (21) of the vehicle (1) for transferring heat between the charging module (2) and the heat thermal system (21) via the heat transfer component (24) when the charging module (2) is mechanically attached to the charging inlet arrangement (3).

12. An electric charging inlet arrangement according to claim 11, **characterized in that** the heat transfer component (24) has one or more channels (50) for circulating a working fluid in the heat transfer component (24) and transferring heat between the heat transfer component (24) and the working fluid.

13. An electric charging inlet arrangement according to claim 11 or 12, **characterized in that** the heat transfer component (24) comprises a contact surface (23) for contacting a surface (22) of the charging module (2) for transferring heat between the charging module (2) and the heat transfer component (24).

14. An electric charging inlet arrangement according to any of claims 11-13, **characterized in that** the charging inlet arrangement (3) comprises an electrical connector (42) by which connector the charging inlet arrangement (3) is electrically connectable to the charging module (2) for providing DC power to the vehicle (1) via the electrical connector (42).

15. An electric charging inlet arrangement according to any of claims 11-14, **characterized in that** the charging inlet arrangement (3) has a coupling portion (18) of a mechanical coupling device (17) by which coupling portion (18) the charging inlet arrangement (3) is mechanically attachable to and releasable from the charging module (2).

16. An electric charging inlet arrangement according to claim 14 and 15, **characterized in that** the heat transfer component (24) is ring-shaped and extends around the coupling portion (18) and the electrical connector (42).

17. A charging system for a vehicle, the charging system comprising a portable electric charging module (2) according to any of claims 1-10 and an electric charging inlet arrangement (3) intended to be arranged on the vehicle, the charging inlet arrangement (3) having a coupling portion (18) of the mechanical coupling device (17) which coupling portion is connectable to the coupling portion (16) of the charging module (2).

18. A vehicle (1) comprising a portable electric charging module (2) according to any of claims 1-10 and/or an electric charging inlet arrangement (3) according to any of claims 11-16 and/or a charging system according to claim 17.
